# NEUE EUROPÄISCHE PATENTSCHRIFT

(11) **EP 1 333 122 B2**
(45) Veröffentlichungstag und Bekanntmachung des Hinweises auf die Entscheidung über den Einspruch: **21.09.2011**
(45) Hinweis auf die Patenterteilung: 17.10.2007
(21) Anmeldenummer: 03002131.5
(22) Anmeldetag: 31.01.2003
(51) Int. Cl.: D21G 1/00, F16F 15/00

(54) **Verfahren zur aktiven Dämpfung von Schwingungen**
Active vibration-damping method
Méthode d'amortissement actif de vibrations

(30) Priorität: 05.02.2002 DE 10204770
(43) Veröffentlichungstag der Anmeldung: 06.08.2003
(73) Patentinhaber: Andritz Küsters GmbH, 47805 Krefeld (DE)
(72) Erfinder: Hader, Peter, 47906 Kempen (DE); Meitner, Robert, 47809 Krefeld (DE)
(74) Vertreter: Kluin, Jörg-Eden

(56) Entgegenhaltungen:
- EP-A- 0 087 729
- EP-A- 0 419 826
- EP-A1- 0 879 589
- WO-A-01/50035
- WO-A1-01/50030
- WO-A1-03/064763
- DE-A- 3 639 009
- DE-A- 4 232 920
- DE-A- 19 652 769
- DE-C1- 10 204 322
- US-A- 3 347 157
- US-A- 4 910 842
- US-A- 5 553 805
- US-A- 5 961 899
- US-A- 6 095 039

## Beschreibung

Die Erfindung bezieht sich auf ein Verfahren der dem Oberbegriff des Anspruchs 1, auf eine Walze der dem Oberbegriff des Anspruchs 6 sowie auf eine Vorrichtung der dem Oberbegriff des Anspruchs 13 entsprechenden Art.

Die Verwendung von Walzen ist zum Bearbeiten einer laufenden Bahn in vielfältiger Hinsicht bekannt. Als Beispiel sei eine Papiermaschine genannt, in der die Papierbahn einem von zwei gegeneinander wirkenden Walzen gebildeten Bearbeitungsspalt - dem sogenannten Nip - zugeführt wird und beim Durchlaufen des Bearbeitungsspalts eine Druck- und ggf. auch Wärmebehandlung erfährt.

Mit zunehmender Bearbeitungsgeschwindigkeit der Warenbahnen, die einhergeht mit einem Anstieg der Drehzahl der zu bearbeitenden Walzen kommt es in einer zunehmenden Zahl von Fällen dazu, dass zumindest eine der Walzen während der Bearbeitung zu schwingen beginnt, was zunächst zu einer ungleichmäßigen Oberflächenstruktur der bearbeiteten Bahn und schließlich zur Ausbildung von Bereichen erhöhten Verschleißes am Walzenmantel führt. Letzteres tritt insbesondere dann auf, wenn der Walzenmantel einen weichen Bezug, beispielsweise aus Kunststoff trägt, wie dies heute in Papiermaschinen regelmäßig der Fall ist.

Zur Dämpfung dieser Schwingungen ist es aus der DE 36 39 009 C2 bereits bekannt, bei einer hydraulisch innen abgestützten Walze, d.h. einer Walze mit einem umlaufenden Walzenmantel und einem in einem Maschinengestell gelagerten feststehenden Querhaupt, das die Walzenachse bildet, an welchem gegen den Innenumfang der Hohlwalze wirkende hydraulische Stützeinrichtungen angreifen, Dämpfungseinrichtungen vorzusehen, die mit Hilfe von Reibelementen die Ausbildung von Schwingungen verhindern sollen. Hierzu sind die Dämpfungseinrichtungen an dem über den Lagerbereich nach außen überstehenden Enden des Querhaupts angeordnet.

In der Praxis hat sich gezeigt, dass es zu Betriebsbedingungen der Walze, die üblicherweise nicht vorhersehbar sind, kommen kann, bei denen sich trotz dieser Maßnahme das Bearbeitungsergebnis durch auftretende Schwingungen verschlechtert.

Aus der EP 0 365 800 A1 ist ein Verfahren zur aktiven Dämpfung von Schwingungen an einer Papiermaschine bekannt. Bei diesem Verfahren werden mit Hilfe eines Regelkreises die kinematischen Größen erfasst und verarbeitet, die Ausdruck der unerwünschten Schwingungen der zu bedämpfenden Struktur sind. Mit diesem Regelkreis wird ein Stellmotor angesteuert, der gemäß einer in der EP 0 365 800 A1 dargestellten Ausführungsform zwischen der schwingungsfähigen Struktur einer Papiermaschine und der Lagerung einer Walze angeordnet ist und über den eine Dämpfungsschwingung eingeleitet wird.

Nachteilig ist bei dieser Vorrichtung, daß die zur Durchführung des in der EP 0 365 800 A1 beschriebenen Verfahrens notwendige Lagerung der Walze über Akuatoren an dem Maschinengestell Schwierigkeiten bereiten kann, unter anderem deshalb, da sich hier in der Regel ein Schwingungsknoten befindet.

Aus der DE 196 52 769 A1 sind ein Verfahren und eine Vorrichtung zur Dämpfung von Kontaktschwingungen rotierender Walzen in einer Papiermaschine bekannt gemäß dem Oberbegriff des Anspruchs 1. Es wird eine phasenversetzte Gegenschwingung in wenigstens eine Lagerstelle einer der Walzen eingeleitet. Da die Einleitung der Gegenschwingung in einem Schwingungsknoten erfolgt, ist eine wirksame Dämpfung nicht immer gewährleistet.

Der Erfindung liegt daher die Aufgabe zugrunde, ein Verfahren sowie eine zum Durchführen des Verfahrens geeignete Walze und Vorrichtung zur Verfügung zu stellen, um die Ausbildung von Schwingungen bei dem Bearbeiten einer Bahn unter Zusammenwirkung mit dem Arbeitsumfang einer durchbiegegesteuerten Walze auf einfachem Wege reduzieren zu können.

Diese Aufgabe wird durch das in Anspruch 1 wiedergegebene Verfahren, in seinem konstruktiven Aspekt durch die in Anspruch 6 wiedergegebene Walze und die in Anspruch 13 wiedergegebene Vorrichtung gelöst.

Erfindungsgemäß werden zur aktiven Dämpfung Kräfte phasenversetzt zu der zu dämpfenden Schwingung in zumindest einem Zapfen der Achse der Walze eingeleitet und zwar mit Abstand in Längsrichtung der Achse vorzugsweise in den nach außen über die Lagerstelle überstehenden Teil des Zapfens, zu einer Lagerstelle der Achse.

Wenn im Obigen und Folgenden von "Achse" die Rede ist, so soll damit zum Ausdruck gebracht werden, daß es sich bei der Walze um eine nicht von außen angetriebene mit einer drehbar oder undrehbar gelagerten "Achse" handelt. Denn es hat sich überraschenderweise gezeigt, daß die zu bedämpfende Schwingung des Walzenmantels über die Einleitung von Kräften in zumindest einen Zapfen des in diesem Falle als Walzenachse dienende Querhaupt gedämpft werden können. Die durchbiegegesteuerte Walze kann insbesondere eine hydraulisch innen abgestützte Walze sein.

Die Erzeugung der Kräfte kann vorzugsweise elektrisch, elektromagnetisch, magnetostriktiv, piezoelektrisch, hydraulisch oder pneumatisch erfolgen.

Die zum Durchführen des erfindungsgemäßen Verfahrens geeignete, erfindungsgemäße Walze zeichnet sich dadurch aus, daß die Einrichtung Mittel zum Ausüben einer periodischen Kraft auf zumindest einen Zapfen der Achse der Walze umfaßt.

Hierzu steht der Zapfen vorzugsweise über seine Lagerstelle über und die Kraft greift an den überstehenden Enden an.

Die Einrichtung umfaßt zur Erzeugung der Kraft vorzugsweise zumindest einen Aktuator, der elektrisch, elektromagnetisch, magnetostriktiv, piezoelektrisch, hydraulisch oder pneumatisch arbeitend ausgestaltet sein kann.

Die Erfindung erstreckt sich auch auf eine Vorrichtung zum Bearbeiten einer laufenden Bahn, die eine erfindungsgemäße Walze aufweist. Die Vorrichtung kann einen von der Walze und einem Gegenwerkzeug gebildeten Bearbeitungsspalt umfassen, wobei das Gegenwerkzeug wiederum eine Walze sein kann.

Ferner betrifft die Erfindung auch einen Zwei- oder Mehrwalzenkalander sowie eine Naßpresse, bei dem zumindest eine der Walzen in der vorbeschriebenen Weise ausgebildet ist.

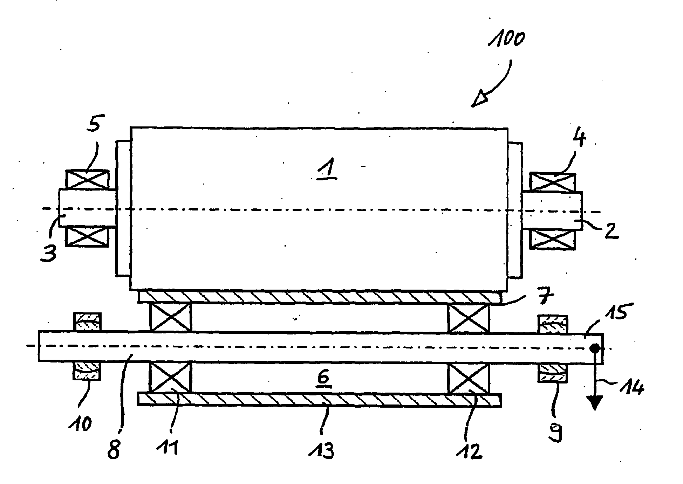

Im Folgenden soll der Erfindungsgegenstand näher anhand der Zeichnung beschrieben werden, in der ein Ausführungsbeispiel der Erfindung am Beispiel eines Zweiwalzenkalanders schematisch dargestellt ist.

Der in der Zeichnung als Ganzes mit 100 bezeichnete Kalander umfaßt eine starre, obere Walze 1, die zwei mit ihr verbundene Walzenzapfen 2 und 3 aufweist, die ihrerseits rotierbar über Lagereinrichtungen 4 und 5 an einem in der Zeichnung nicht dargestellten Maschinengestell gelagert sind.

Die Walze 1 bildet das Gegenwerkzeug zu einer unteren, durchbiegesteuerbar ausgestalteten Walze 6, mit der sie den Bearbeitungsspalt 7 bildet.

Die untere Walze umfaßt als Achse ein undrehbares Querhaupt 8, welches an den Lagerstellen 9 und 10 derart gelagert ist, daß Kräfte in das Querhaupt 8 einleitbar sind.

Über Lagereinrichtungen 11 und 12 ist drehbar auf dem Querhaupt 8 ein Walzenmantel 13 gelagert, dessen äußere Umfangsfläche mit einem Bezug, beispielsweise aus Kunststoff, versehen sein kann.

Wird ein derartiger Zweiwalzenkalander zur Papierbearbeitung verwendet, so beträgt die Drehzahl der unteren Walze beispielsweise etwa sieben Umdrehungen pro Sekunde. Erfahrungsgemäß können bei dieser Drehfrequenz Schwingungen im Frequenzbereich zwischen 60 und 300 Hz auftreten, die sich nachteilig auf das Bearbeitungsergebnis der durch den Walzenspalt geführten Bahn auswirken und zur Erhöhung des Verschleißes insbesondere eines Bezuges der unteren Walze 6 führen können.

Zur aktiven Dämpfung dieser Schwingungen werden diese mittels eines Schwingungssensors, der beispielsweise mechanisch, elektrisch, elektromagnetisch, magnetisch oder optisch wirken kann, vorzugsweise an einer Stelle, an der eine relativ große Schwingungsamplitude zu erwarten ist (in der Zeichnung nicht dargestellt) in dem Kalander erfaßt und in einer in der Zeichnung ebenfalls nicht dargestellten Steuer- bzw. Regeleinrichtung in zur Ansteuerung von Aktuatoren zum Einleiten von Biegemomenten in das Querhaupt 8 der Walze 6 geeignete Signale umgeformt.

Zur Einleitung der Kräfte ist in dem in der Zeichnung dargestellten Ausführungsbeispiel eine im Einzelnen nicht dargestellte Einrichtung vorgesehen, die mit Hilfe von Aktuatoren Kräfte in den Zapfen 15 des Querhaupts einleiten, die mit dem Pfeil 14 symbolisiert werden sollen. Die Richtung des Pfeils stellt die Richtung der ausgeübten Kraft zu einem bestimmten Zeitpunkt dar. Es versteht sich, daß sich die Richtung und auch die Größe der Kraft periodisch ändern muß, um eine zur Dämpfung der Schwingung geeignete Gegenschwingung erzeugen zu können.

Die Erfindung ist keinesfalls auf die Einleitung der Kräfte in einen Zapfen in der dargestellten Weise beschränkt. Es versteht sich, daß auch konstruktiv andere Möglichkeiten zur Verwirklichung der Erfindung geeignet sind.

### BEZUGSZEICHENLISTE

- 1: Walze
- 2: Walzenzapfen
- 3: Walzenzapfen
- 4: Lagereinrichtung
- 5: Lagereinrichtung
- 6: Walze
- 7: Bearbeitungsspalt
- 8: Querhaupt
- 9: Lagerstellen
- 10: Lagerstellen
- 11: Lagereinrichtung
- 12: Lagereinrichtung
- 13: Walzenmantel
- 14: Pfeil
- 15: Pfeil

- 100: Kalander

## Patentansprüche

1. Verfahren zur aktiven Dämpfung von Schwingungen in einer Vorrichtung zum Bearbeiten einer laufenden Bahn, bei dem die Bahn mit dem Arbeitsumfang zumindest einer durchbiegegesteuerten Walze (6) zusammenwirkt, wobei
die aktive Dämpfung durch phasenversetzt zu dieser Schwingung in zumindest einen Zapfen der von einem Querhaupt der Walze gebildeten Achse (8) der Walze (6) eingeleitete Kräfte erfolgt,
**dadurch gekennzeichnet,**
**dass** die Kräfte mit Abstand in Richtung der Mittellängsachse (A) der Achse (8) zu einer Lagerstelle (9) der Achse (8) eingeleitet werden
und **dass** diese Schwingungen mittels eines Schwingungssensors erfasst und mittels einer Steuer- oder Regeleinrichtung in zur Ansteuerung von Aktuatoren geeignete Signale umgeformt werden.

2. Verfahren nach Anspruch 1, **dadurch gekennzeichnet, dass** die Kräfte in den nach außen über die Lagerstelle überstehenden Teil des Zapfens der Achse (8) eingeleitet werden.

3. Verfahren nach einem der Ansprüche 1 oder 2, **dadurch gekennzeichnet, dass** zur Erzeugung der Kräfte elektrisch, elektromagnetisch, magnetostriktiv, piezoelektrisch, hydraulisch oder pneumatisch betriebene Aktuatoren verwendet werden.

4. Verfahren nach einem der Ansprüche 1 bis 3, **dadurch gekennzeichnet, dass** der Schwingungssensor mechanisch, elektrisch, elektromagnetisch, magnetisch oder optisch wirkt.

5. Verfahren nach einem der Ansprüche 1 bis 4, **dadurch gekennzeichnet, dass** die Schwingung an einer Stelle, an der eine große Schwingungsamplitude zu erwarten ist, erfasst wird.

6. Durchbiegegesteuerte Walze zur Bearbeitung einer laufenden Bahn, insbesondere für den Einsatz in einer Papiermaschine,
mit einer Einrichtung zur aktiven Dämpfung von Schwingungen der Walze, nach einem Verfahren nach einem der Ansprüche 1 bis 5
**dadurch gekennzeichnet,**
**dass** die Einrichtung Aktuatoren zum Ausüben einer periodischen Kraft phasenversetzt zu der zu dämpfenden Schwingung auf zumindest einen Zapfen der Achse (8) der Walze (6) mit Abstand in Richtung der Mittellängsachse (A) der Achse (8) zu einer Lagerstelle (9) der Achse (8), einen Schwingungssensor, der diese Schwingungen erfasst
und eine Steuer- oder Regeleinrichtung, die die von dem Schwingungssensor erzeugten Signale in zur Ansteuerung von Aktuatoren geeignete Signale umformt, umfasst.

7. Walze nach Anspruch 6, **dadurch gekennzeichnet, dass** der Schwingungssensor ein mechanisch, elektrisch, elektromagnetisch, magnetisch oder optisch wirkender Sensor ist.

8. Walze nach Anspruch 6 oder 7, **dadurch gekennzeichnet, dass** der Schwingungssensor an einer Stelle, an der eine größere Schwingungsamplitude zu erwarten ist, angeordnet ist.

9. Walze nach einem der Ansprüche 6 bis 9, **dadurch gekennzeichnet, dass** der Zapfen über seine Lagerstelle übersteht.

10. Walze nach Anspruch 9, **dadurch gekennzeichnet, dass** die Aktuatoren derart ausgebildet sind, dass die Kraft an dem überstehenden Ende des Zapfens angreift.

11. Walze nach einem der Ansprüche 6 bis 10, **dadurch gekennzeichnet, dass** die Aktuatoren ein auf elektrischem, elektromagnetischem, magnetostriktivem, piezoelektrischem, hydraulischem oder pneumatischem Wege arbeitende Aktuatoren sind.

12. Walze nach einem der Ansprüche 6 bis 11, **dadurch gekennzeichnet, dass** die Walze (6) eine hydraulisch innen abgestützte Walze ist.

13. Vorrichtung zum Bearbeiten einer laufenden Bahn,
mit zumindest einer Walze,
**dadurch gekennzeichnet,**
**dass** die Walze (6) die Merkmale eines der Ansprüche 6 bis 12 aufweist.

14. Vorrichtung nach Anspruch 13, **dadurch gekennzeichnet, dass** die Vorrichtung einen von der Walze und einem Gegenwerkzeug gebildeten Bearbeitungsspalt (7) umfasst.

15. Vorrichtung nach Anspruch 14, **dadurch gekennzeichnet, dass** das Gegenwerkzeug eine Walze (1) ist.

16. Vorrichtung nach Anspruch 15, **dadurch gekennzeichnet, dass** die Vorrichtung ein Zweiwalzenkalander ist.

17. Vorrichtung nach Anspruch 15, **dadurch gekennzeichnet, dass** die Vorrichtung ein Mehrwalzenkalander ist.

18. Vorrichtung nach Anspruch 15, **dadurch gekennzeichnet, dass** die Vorrichtung eine Nasspresse ist.

## Claims

1. Method for the active damping of vibration in an apparatus for processing a moving web, in which the web interacts with the working circumference of at least one deflection controlled roll (6), the active damping being carried out by forces introduced, with a phase offset in relation to this vibration, into at least one journal of the axle (8) of the roll (6), the axle being formed by a cross head of the roll, **characterized in that** the forces are introduced at a distance from a bearing point (9) of the axle (8) in the direction of the longitudinal mid-axis (A) of the axle (8) and **in that** these vibrations are detected by means of a vibration sensor and are converted by means of an open-loop or closed-loop control device to signals which are suitable for the driving of actuators.

2. Method according to Claim 1, **characterized in that** the forces are introduced into the part of the journal of the axle (8) which projects outwards beyond the bearing point.

3. Method according to either of Claims 1 and 2, **characterized in that**, in order to produce the forces, actuators which are operated electrically, electromagnetically, magnetostrictively, piezoelectrically, hydraulically or pneumatically are used.

4. Method according to one of Claims 1 to 3, **characterized in that** the vibration sensor works mechanically, electrically, electromagnetically, magnetically or optically.

5. Method according to one of Claims 1 to 4, **characterized in that** the vibration is detected at a point at which a large vibration amplitude can be expected.

6. Deflection controlled roll for processing a moving web, in particular for use in a papermaking machine, having a device for the active damping of vibrations of the roll, according to a method according to one of Claims 1 to 5 **characterized in that** the device has actuators for exerting a periodic force, with a phase offset in relation to the vibration to be damped, on at least one journal of the axle (8) of the roll (6) at a distance from a bearing point (9) of the axle (8) in the direction of the central longitudinal axis (A) of the axle (8), a vibration sensor which detects these vibrations, and an open-loop or closed-loop control device which converts the signals produced by the vibration sensor to signals which are suitable for the driving of the actuators.

7. Roll according to Claim 6, **characterized in that** the vibration sensor is a mechanically, electrically, electromagnetically, magnetically or optically acting sensor.

8. Roll according to Claim 6 or 7, **characterized in that** the vibration sensor is arranged at a point at which a relatively large vibration amplitude can be expected.

9. Roll according to one of Claims 6 to 8, **characterized in that** the journal projects beyond its bearing point.

10. Roll according to Claim 9, **characterized in that** the actuators are constructed in such a way that the force acts on the projecting end of the journal.

11. Roll according to one of Claims 6 to 10, **characterized in that** the actuators are actuators that operate in an electrical, electromagnetic, magnetostrictive, piezoelectric, hydraulic or pneumatic way.

12. Roll according to one of Claims 6 to 11, **characterized in that** the roll (6) is a hydraulically internally supported roll.

13. Apparatus for processing a moving web, having at least one roll, **characterized**
**in that** the roll (6) has the features of one of Claims 6 to 12.

14. Apparatus according to Claim 13, **characterized in that** the apparatus comprises a processing nip (7) formed by the roll and an opposing tool.

15. Apparatus according to Claim 14, **characterized in that** the opposing tool is a roll (1).

16. Apparatus according to Claim 15, **characterized in that** the apparatus is a two-roll calender.

17. Apparatus according to Claim 15, **characterized in that** the apparatus is a multi-roll calender.

18. Apparatus according to Claim 15, **characterized in that** the apparatus is a wet press.

## Revendications

1. Procédé pour l'amortissement actif de vibrations dans un dispositif destiné au traitement d'une feuille en mouvement, selon lequel la feuille coopère avec la circonférence de travail d'au moins un cylindre (6) commandé en flexion, l'amortissement actif ayant lieu par des forces induites en déphasage de la vibration dans au moins un tourillon de l'axe (8) du cylindre (6) formé par une traverse du cylindre, **caractérisé en ce que** les forces sont induites à distance en direction de l'axe longitudinal médian (A) de l'axe (8) par rapport à un point de palier (9) de l'axe (8), et **en ce qu'**un capteur de vibrations détecte ces vibrations, qui sont converties par un dispositif de commande ou de régulation en signaux adaptés à la commande d'actionneurs.

2. Procédé selon la revendication 1, **caractérisé en ce que** les forces sont induites dans la partie du tourillon de l'axe (8) qui fait saillie vers l'extérieur au-delà du point de palier.

3. Procédé selon l'une quelconque des revendications 1 ou 2, **caractérisé en ce que** pour générer les forces, on utilise des actionneurs à actionnement électrique, électromagnétique, magnétostrictif, piézoélectrique, hydraulique ou pneumatique.

4. Procédé selon l'une des revendications 1 à 3, **caractérisé en ce que** le capteur de vibrations est un capteur mécanique, électrique, électromagnétique, magnétique ou optique.

5. Procédé selon l'une des revendications 1 à 4, **caractérisé en ce qu'**on détecte la vibration à un endroit où elle a une grande amplitude attendue.

6. Cylindre commandé en flexion destiné au traitement d'une feuille en mouvement, en particulier pour l'utilisation dans une machine à papier, avec un dispositif pour l'amortissement actif de vibrations du cylindre, selon un procédé selon l'une quelconque des revendications 1 à 5, **caractérisé en ce que** le dispositif comprend des actionneurs pour exercer une force périodique en déphasage par rapport à la vibration à amortir sur au moins un tourillon de l'axe (8) du cylindre (6) à distance dans la direction de l'axe longitudinal médian (A) de l'axe (8) par rapport à un point de palier (9) de l'axe (8), un capteur de vibrations qui détecte ces vibrations, et un dispositif de commande ou de régulation qui convertit les signaux générés par le capteur de vibrations en signaux adaptés à la commande des actionneurs.

7. Cylindre selon la revendication 6, **caractérisé en ce que** le capteur de vibrations est un capteur mécanique, électrique, électromagnétique, magnétique ou optique.

8. Cylindre selon la revendication 6 ou 7, **caractérisé en ce que** le capteur de vibrations est disposé à un endroit où une plus grande amplitude de vibration est attendue.

9. Cylindre selon l'une des revendications 6 à 8, **caractérisé en ce que** le tourillon fait saillie au-delà de son point de palier.

10. Cylindre selon la revendication 9, **caractérisé en ce que** les actionneurs sont réalisés de telle sorte que la force est appliquée sur l'extrémité en saillie du tourillon.

11. Cylindre selon l'une quelconque des revendications 6 à 10, **caractérisé en ce que** les actionneurs sont des actionneurs fonctionnant de manière électrique, électromagnétique, magnétostrictive, piézoélectrique, hydraulique ou pneumatique.

12. Cylindre selon l'une quelconque des revendications 6 à 11, **caractérisé en ce que** le cylindre (6) est un cylindre à support intérieur hydraulique.

13. Dispositif pour le traitement d'une feuille en mouvement avec au moins un cylindre, **caractérisé en ce que** le cylindre (6) présente les caractéristiques de l'une des revendications 6 à 12.

14. Dispositif selon la revendication 13, **caractérisé en ce que** le dispositif comprend une fente de traitement (7) formée par le cylindre et un outil conjugué.

15. Dispositif selon la revendication 14, **caractérisé en ce que** l'outil conjugué est un cylindre (1).

16. Dispositif selon la revendication 15, **caractérisé en ce que** le dispositif est une calandre à deux cylindres.

17. Dispositif selon la revendication 15, **caractérisé en ce que** le dispositif est une calandre à cylindres multiples.

18. Dispositif selon la revendication 15, **caractérisé en ce que** le dispositif est une presse humide.
